# EUROPEAN PATENT APPLICATION

(11) **EP 1 288 827 A1**
(43) Date of publication of application: **05.03.2003**
(21) Application number: 02255538.7
(22) Date of filing: 07.08.2002
(51) Int. Cl.: G06F 17/60

(54) **System, method and software product for allowing a consumer to order image products over a communication network from a plurality of different providers**

(30) Priority: 24.08.2001 US 939369; 31.08.2001 US 944549
(71) Applicant: EASTMAN KODAK COMPANY, Rochester, New York 14650 (US)
(72) Inventor: Chauvin, Lou, Patent Legal Staff, Rochester, New York 14650-2201 (US); Bussey, Howard E, Patent Legal Staff, Rochester, New York 14650-2201 (US); Gerskovich, Philip, Patent Legal Staff, Rochester, New York 14650-2201 (US); Cook, Mark S., Patent Legal Staff, Rochester, New York 14650-2201 (US); Dobbs, Christopher M., Patent Legal Staff, Rochester, New York 14650-2201 (US); McIntyre, Dale F., Patent Legal Staff, Rochester, New York 14650-2201 (US); Berarducci, Thomas N., Patent Legal Staff, Rochester, New York 14650-2201 (US)
(74) Representative: Haile, Helen Cynthia

(57) **Abstract**

The present invention is directed to a system, method, and software product for linking a user/requester to a service provider selected from a plurality of different service providers. The system includes providing a services directory which includes entries for a plurality of services, each service associated with at least one of the plurality of different service providers. A user selects a criterion for selection of a service provider. The system automatically provides the requester with a list of one or more of the plurality of different service providers based on the criterion. The requester then selects one of the plurality of different service providers from the list. The user then submits a request for a desired service to the selected service provider and the provider provide the desired service.

## Description

The present invention relates to a system for organizing, sharing, managing and ordering of digital images and/or image products over a communication network. In particular, for allowing individuals and/or businesses to order goods and/or services over a communication network from a plurality of different providers that offer the same and/or different goods and/or services.

The consumer digital photography industry has the potential for substantial growth. Yet, today several factors are standing in the way, slowing the growth rate. These factors can be understood from the perspectives of both consumer issues and business issues.

Today, many consumers are ignorant of the benefits of digital photography. Many who know of it's existence still see it as something "high tech," complex, and with limited usefulness - good for emailing, but not capable of producing "normal pictures." In particular, there is low awareness that traditional prints - the kind they expect from film - can be made from digital pictures.

Those who do understand its potential benefits are frustrated. Their experience with the digital photographic system is fraught with difficulties. In particular, it is not obvious how to get prints in a simple manner. Printing service infrastructures are not widespread. Awareness of internet printing services is low. Solutions that do exist are closed, limited to a single provider, and therefore often limited in terms of access, location, and features. The only alternative is the "do it yourself" route - investing in the necessary printer and supplies. However, the consumer soon learns that this path has drawbacks. Supplies are expensive, the process takes time, trial and error is often necessary, technical problems can arise, and the quality and durability of the prints can be limited. Moreover, this route is only open to the technically confident - and only those who own a sufficiently capable computer.

Many service providers in the industry are aware of these problems. Yet, industry conditions are causing them to be exacerbated, not addressed. By and large, each service provider has to go it alone, trying to solve the problems single-handedly. A direct result is that each solution is incompatible with the next, built without standards. Solutions become proprietary, and incapable of interacting with one another. Partnerships are made more difficult.

Further more participants are required to invest in parts of the service supply chain that are not within their core competencies. Additional resources are needed, mistakes are inevitably made, and deployment is slowed. Potential new and innovative service providers in specific aspects of the service provider chain are locked out. Perhaps worst of all, the consumers are not well served. Ultimately, consumers experience barriers instead of free choice. Consumers would benefit from an open marketplace that provides their needs at any time or place - whether at home, on the road, or on vacation - without limiting their choices.

The present invention provides a system, method and software solution that links digital cameras, Internet storage and printing, and retail photo finishing together. It provides both technical specifications and the business mechanisms that allow the system to work. It supports the ability for billing and payment information to flow around the system that gives economic incentives for participants to work together.

The present invention also provides opportunities for applications to communicate to digital imaging order creation, storage and fulfillment providers across a global network. The application categories includes Internet enabled devices (cameras, phones, personal digital assistants, frames, ...), kiosks, desktop software, web applications, and behind the counter applications like those found in mini-labs or photo-ramps. Storage, fulfillment, and order creation services categories include on-line, wholesale, and in-store. Applications communicate to these services through a known interface.

A system according to the present invention includes a Directory Service layer that provides a list of service providers where the service providers can publish their services, definitions, capabilities, and location. Given a set of services available through the Directory Service layer, applications can be created to implement new work flows by finding and utilizing the services they want to interact with. For example a desktop application can be written to upload images from home to an on-line provider, and order prints to be made at the fulfillment lab located at a local retailer store. The present invention takes advantage of the current industry movement toward providing services on the Internet, called Web Services and its associated standards that provide service discovery, description, transport and environment. It takes advantage of the existing standards like SOAP, WSDL, and initiatives like UDDI, with the expectation that these initiatives will eventually move to standards bodies like the W3C.

The present invention allows customers to use a preferred service provider and/or on-line service provider of their choice. The present invention also allows the ability for a providers to provide a particular good and/or service that they would like without having to provide a full range of goods and/or services for their particular customers.

In accordance with one aspect of the present invention there is provided a method of selecting a digital photographic service provider from a plurality of different service providers and providing a photographic image service with respect to at least one digital image located at a user location remote from the selected photographic service provider, comprising:
a) providing a services directory which includes entries for a plurality of different service providers;
b) the user providing a criterion for selection of a service provider;
c) automatically providing the requester with a list of one or more of the plurality of different service providers based on the criterion;
d) the requester selecting one of the plurality of different service providers from the list;
e) providing a request for a desired service to the selected service provider; and
f) providing of the desired service by the selected service provider.

In accordance with another aspect of the present invention there is provided a system for providing imaging services over a communications network, including:
a) a first device having a user interface for receiving commands from a user and a network interface,
b) a plurality of different service providers connected to the communication network,
c) a computer having a network interface for communication to the first device over the communication network, wherein the computer having a services directory having entries for a plurality of different service providers, each of the plurality of different service providers having associated information,
d) wherein the user, using the first device, provides at least one criterion
e) the computer automatically provides a list of at least one of the plurality of different service providers based on the criterion, using the associated information,
f) the selected service provider providing the requested service.

In accordance with yet another aspect of the present invention there is provided a computer software product for linking a digital camera user to a service provider selected from a plurality of service providers, the computer software program will when loaded on to a computer will cause the computer to do the following steps:
a) providing a services directory which includes entries for a plurality of service providers;
b) communicating at least one criterion from the digital camera user;
c) automatically providing the digital camera user with a list of one or more of the plurality of different service providers based on the criterion;
d) the digital camera user selecting one of the plurality of different service providers from the list;
e) providing a request for a desired service to the selected service provider,
f) providing of the desired service by the selected service provider.

In accordance with still another aspect of the present invention there is provided a method of linking a digital photographic imaging service requester to a service provider selected from a plurality of different service providers that are registered in a member system, comprising:
a) providing a services directory which includes entries for a plurality of services, each service associated with at least one of the plurality of different service providers;
b) the service requester providing at least one digital image and at least one criterion;
c) automatically providing the requester with a list of one or more of the plurality of different service providers based on the criterion;
d) the requester selecting one of the plurality of different service providers from the list;
e) providing a request for a desired service and providing the digital image to the selected service provider; and
f) providing of the desired service by the selected service provider.

These and other aspects, objects, features and advantages of the present invention will be more clearly understood and appreciated from a review of the following detailed description of the preferred embodiments and appended claims, and by reference to the accompanying drawings.

In the detailed description of the preferred embodiments of the invention presented below, reference is made to the accompanying drawings in which:
Fig. 1 is diagram of a system made in accordance with the present invention;
Fig. 2 is diagram of component architecture of the system of Fig. 1;
Fig. 3 is a flow diagram depicting a preferred method according to the present invention; and
Fig. 4A-4F depict various user interface display screens used in the method disclosed in Fig. 3.

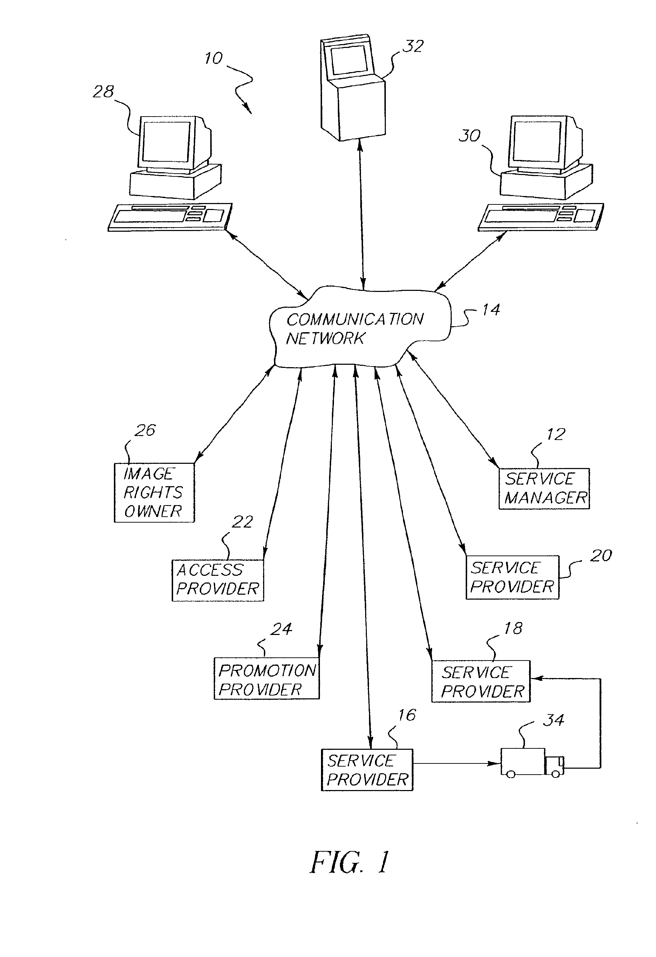

Referring to Fig. 1, there is illustrated a system 10 made in accordance with the present invention. The system 10 is designed to provide extensive offerings of image products and services from a plurality of different photographic service providers. The system 10 also allows an individual service provider to concentrate on providing goods and/or services that they have core competencies, yet also allows the service provider to offer their customer the goods and/or services of other providers while still maintaining it's relationship with the customer. The system 10 sets forth certain standard and protocols to be followed by the members for the transmission of images and orders over the communication network so that the various members can easily exchange or provide information to other members and/or users. In addition the system 10 permits the providers to offer services to a potential broader range of customers. The system 10 further allows the customer to create inquires so that orders can be fulfilled by a service provider that meets the criteria provided by the customer.

The system 10 includes a service manager 12 that provides several functions. In the embodiment illustrated, service manager 12 comprises is a computer/server having appropriate software programs for operation in accordance with the present invention. The service manager 12 provides a services directory of various services/goods that may be obtained from member providers through the system 10. Each member provider (photographic service provider) registers with the service manager 12 setting forth the type of goods and services it can provide. Further additional information may be provided by the member provider, such as location, hours of operation, costs, delivery options or any other information the service provider believes may be useful by a potential purchaser. This may also include specific information that is viewed by potential purchasers. For example, one price list may reserved for wholesale business and one for retail customer. The entered information is stored by the service manager 12 in a manner that allows members and customer to search the information to find a provider that best matches their needs and requirements for goods and/or services .

The service manager 12 is accessible by various member providers 16, 18, 20, 22, 24, 26, and customers/users 28, 30 and 32 over a common communication network 14. In the embodiment illustrated , the communication network 14 comprises the Internet. However, any appropriate communication network may be utilized such as a local area network (LAN) or a wide area network (WAN).. In order for member providers 16, 18, 20, 22, 24 and 26 to be accessed through the system 10, they must have registered with the service manager 12 providing the appropriate required information and optional information that is allowed. The registration process includes an agreement by the provider to follow the technical standards and business practices set forth by the system 10. In the embodiment illustrated, member providers 16, 18, and 20 are service providers that provide various photographic related goods and/or services. The member providers 16, 18, and 20 may provide a full range of photographic goods and/or services, provide only a few services, or provide specialty goods and/or services. For illustrative purposes only, member provider 16 may provide a full range of photographic prints and/or services, whereas member provider 18 may provide only large prints and framing and member provider 20 may provide novelty products such as mugs, T-shirts, hats, etc having custom images thereon.

Member provider 22 in the embodiment illustrated is an access provider that stores high resolution digital images that can be accessed by other member providers and/or users. The member provider 22 may charge these members and/or users for storage and/or access to the digital images in any manner deemed appropriate. For example, but not by way of limitation, charges may be assessed to the owner of the digital image and/or to the entity accessing the image.

Member provider 24 in the embodiment illustrated is a promotion provider that makes available to customers or other members promotions with respect to the purchase of goods and/or services. For example, the member provider 24 provides a promotion to member provider 16 for a customer that purchases goods and/or services through or from member provider 16. A fee may be paid by member 24 to access member provider 16 or to the service manager 12. Also a fee usually incurred by the customer can be subsidized or paid by the member provider 24.

Member provider 26 is an image owner that has ownership rights to images that it stores or that is stored on his behalf at member provider 22. Member provider 26 may collect fees from a user or another member provider in exchange for granting the right to use digital images that it owns.

Customers/users 28, 30, and 32 represents various users connected to system 10 for the placing of orders for goods and/or services with respect to digital images. In particular, users 28 and 30 represent two separate customers using personal computers that have appropriate software for communication over the internet 14 and interacting with the various member providers and service manager 12. Customer/user 32 is a computer terminal typically located at retail or public available site. In the embodiment illustrated, customer 32 is using a kiosk for communication with system 10. The images may be provided by the customer directly to the kiosk or are accessed from a digital storage location that is near or remote from the customer. For example, the digital images may be stored by access provider 22.

In the event that member provider 16 requires an additional service from another member provider such as member provider 18, it may be necessary to transfer a partially completed order between member providers. It is preferable that the additional service be provided over the communication network 14. However, this may not be an option. For example, but not by way of limitation, member provider 16 may produce an enlargement of a customer supplied digital image. To complete the order, member provider 16 requests the framing service offered by member provider 18. To complete the order, the enlargement with associated order information must be physically transported to member provider 18 via delivery transport 34 such as a vehicle. Once the requested frame is combined with the enlargement, the completed order can then be shipped back to provider 16 for delivery to the recipient or shipped directly from member provider 18 using the information regarding order delivery collected by member provider 16 to the recipient.

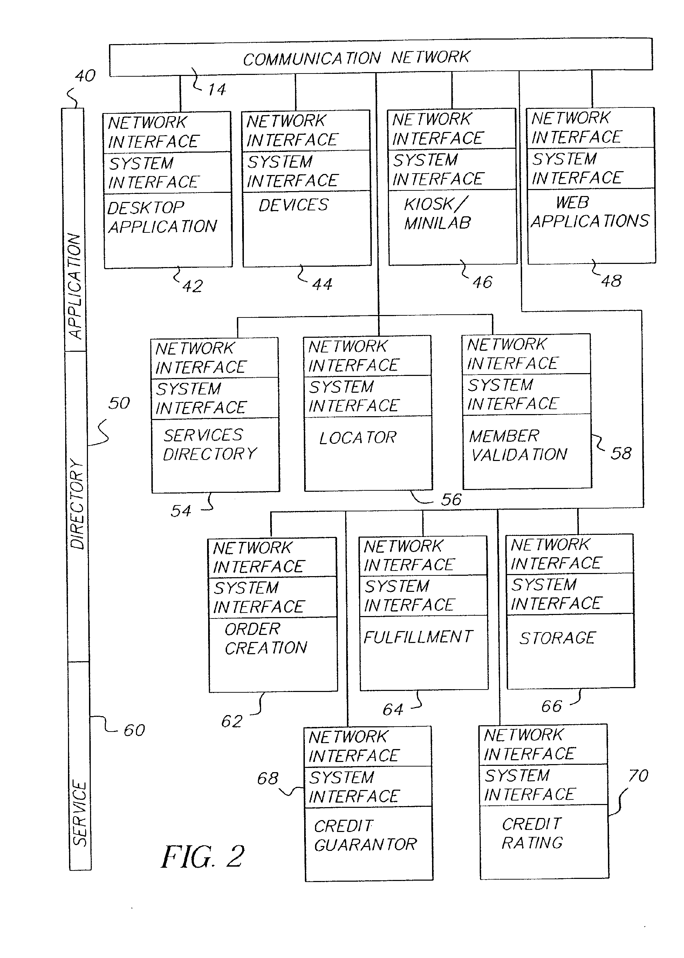

Referring to Fig. 2, there is illustrated a diagram of the component architecture of the system of Fig. 1. The system 10 can be considered as being divided into three layers of operation. The top layer 40 consists of software and devices for the creating and placing of orders. For example, a customer may place an order using a computer, such a personal computer, running a software application 42 which establishes a connection with system 10. Device 44 comprises various other electronic devices capable of communicating with system 10 such as, but not limited to digital cameras, digital image enabled phones, digital picture frames, and personal digital assistants. Device 46 represents a kiosk having an appropriate user interface and a communication interface for communicating with system 10 thereby allowing a user of the kiosk to create and place an order for goods and/or services. Alternatively, device 46 may comprise a digital mini-lab having appropriate communication software thereby allowing a retailer and/or customer to create and place an order for goods and/or services within system 10. In an alternate form of use of a personal computer, a customer at block 48 may run a software application via a conventional web browser such as Netscape Navigator for gaining entry to system 10.

Continuing with Fig. 2, a middle layer 50 represents the functionality of the service manager 12. Middle layer 50 is partitioned into functional blocks 54, 56, and 58. As illustrated, each of blocks 54, 56, and 58 can reside on different web servers (not shown) each with their own interface to the communication network 14 and system 10. Such partitioning allows the system 10 and service manager 12 to scale more readily as network traffic increases. However, functional blocks 54, 56, and 58 can alternatively reside on a single web server/computer (not shown) when serving locations with lower network demand. Block 54 comprises a directory/list of all available services within system 10 and includes the database functionality of all the registered member providers and their related information such as unique member ID, service capability, costs of goods/services, delivery capability etc., etc. It is to be understood that a member provider can represent a group/chain of commonly branded and/or owned stores, for example, a chain of drug stores, discount stores, etc. In this case the unique member ID may further include an additional code/number to designate specific store site within the chain. The registration information provided by the provider includes required information of the member provider and any optional information that is allowed by manager 12. Block 54 can be queried from the communication network 14 and communicates with Blocks 56 and 58 to assist users and/or member providers to select the proper combination of member providers to complete an order as will be described later herein.

Block 56 represents a unique service available within system 10 and is known as a locator service or simply a locator. The locator functions to provide and receive criteria from users and/or member providers. The criteria is then formed into filters that can be applied to the services directory database of block 54. Block 54 returns a list of member providers to the locator of block 56 matching the provided criteria. An example of a criterion provided by the locator is the physical proximity of the member provider to the service requestor. It should be understood that the criteria may comprise a list of various desired criterion. In addition, the service manager 12 may set predetermined sets of various criteria/criterion that can simply selection of a particular provider. This allows the system 10 to offer well know feature that are market to broad consumer base, for example, a branded feature, such as Kodak's Color Watch™ system for producing prints.

Block 58 provides member validation services to requesting member providers to prevent fraud by validating that a member provider is a legitimate registered member or customer in good standing. This information can also be used to regulate pricing to specific classes of service requestors in order to differentiate between wholesale, retail and user level service requests.

Continuing with Fig. 2, a bottom layer 60 is shown which represents all the various services and member providers provided by the system 10. Bottom layer 60 includes a plurality of services 62, 64, 66, 68, and 70. In the particular embodiment illustrated, service 62 provides for the ability of creating an order on behalf of a requestor. The order creation services may be provided by any of the member providers 16, 18, 20, 22, 24, and 26. For example, the order creation may result from the user accessing member provider 22 who then processes the order by having the appropriate member provider providing the requested goods and/or services. Alternatively, the order creation may occur directly with any of the other member providers as appropriate for that member provider.

Service block 64 represents the fulfillment of goods and/or services for a requestor. The actual fulfillment of goods and/or services will be provided by any of the registered member providers capable of providing the required goods and/or services.

Service block 66 represents where the digital images are stored. In the particular embodiment illustrated, this is provided by member provider 22. However, it will be understood that any of the member providers of system 10 can store and provide access to digital images.

Service block 68 represents a system whereby a provider provides goods and/or services to a customer to which it is not directly affiliated with. The system 10 provides for an optional guarantee of payment for services provided by member providers that guarantees payment to a requested member provider who produces the requested goods and/or services from the requesting member provider. The accountability of credit guarantors stabilizes a large system such as system 10 where different member providers can be located globally and have no formal business relationship with each other. Defaulting on the payment for delivered goods and/or services by a requesting member provider causes service manager 12 to negatively impact the credit rating of the defaulting member provider, and may include removing the member from the Directory list. In addition, the manager 12 can assess a fee against a member provider to be credited against the cost of goods and/or services delivered. Periodic renewals of member provider registrations can have a higher fee associated with member providers with a history of defaulting or late payments.

Service block 70 represents a credit and quality of service performance history available to requesting and/or authorized member providers or customers. This rating may be of value in determining the choice of a member provider and used as a criterion by the locator of block 56. The service request can have an associated fee with the retrieval of the requested information.

In order to better understand the operation of system 10, various scenarios will be described. In the first scenario, a user purchases a digital camera from a retailer which is provided with application software 42 for operating on a personal computer that enables the personal computer to communicate with the system 10. In addition, several retailers registered their ability to accept print orders in the services directory 54 managed by the service manager 12 of system 10. Operating the application software provided, the user accesses system 10 and provides a "find nearest" criterion for the locator of block 56 which returns a few choices based on the user's address. When the user selects his preferred fulfillment member provider, the application software stores a reference to that registered member provider. When the electronic order is completed, the application software creates a print order and routes the order and the image files to the selected member provider. The selected member provider accepts the order and places it in its queue for fulfillment which when completed, automatically notifies the user to pick up the order at the retail fulfillment member provider. In an alternate embodiment of this scenario, the retailer can preprogram either the camera if it has a communication interface or the provided application software to automatically configure itself to access the retailer fulfillment member provider upon connection to the system 10.

In a second scenario, a user interacts with a kiosk at a retail location. The kiosk, located at a member provider, operates software which communicates with the system 10 and permits access to the user's digital images such that the high resolution digital image file can be downloaded to the kiosk for printing by the kiosk or locally connected printing device. The user can then select a frame for the printed digital image while remaining at the retail store. The system 10 permits the member provider which provides access to the high resolution digital image to assess a fee directly to the kiosk for payment by the user or the kiosk member provider/retailer who is also selling the picture frame.

In a third scenario, a user having filled the digital image storage capacity of a digital camera wishes to offload the digital images to his preferred storage member provider 22 to permit him to resume taking pictures. The user interacting with a kiosk in a theme park operates software running on the kiosk to access the storage member provider 22 of his choice provided within system 10. Using a credit card, the user agrees to pay the kiosk operator a fee for transferring the digital image files from his digital camera to his preferred member provider 22 for storing digital image files. While the digital image files are transferring, software running on the kiosk offers a promotional opportunity provided by promotion member provider 24 in system 10 to print any images (currently being uploaded) at a remote location serviced by another member provider. If the user takes advantage of the promotion, the kiosk member provider will waive or discount the upload fee. In alternate embodiment of this scenario, the promotion provider 26 could have previously provided a coupon to the user as a credit for the kiosk member provider to cover the upload fee. Thus, it should be obvious that a plurality of different member providers can be used at a single location by a single user. In this scenario, a first local member provider can be used for providing image goods and/or services for immediate access, a second provider can be used for long term storage of digital image files, and a third provider can be used for providing goods and/or services at a remote location. For example, the remote location may comprise the user's home address or the location of a designated recipient such as a relative or close friend. Thus the user is not tied to any single member provider that may have restriction in its ability to provide goods and/or services to a user.

In a fourth scenario, a user has a full service member provider 16 which offers a range of services such as scanning of film, digital image storage, printing, and providing of related goods and/or services. An example of such a provider is Ofoto, an online photo service provider. In the arrangement of system 10, a user uploads digital image files from a digital camera via a personal computer operating software to access the full service member provider 16 for digital image file storage. Alternatively, images captured on film and submitted to the full service member provider 16 can be processed (developed), scanned and the resultant digital image files stored along with user uploaded digital image files. The user, under certain circumstances, may desire to print one of the stored digital image files at an alternate fulfillment member provider 18 or 20. For example, if a user wishes to have a digital image printed at a local member provider within a very short period of time, like within an hour, the user may designate a local member provider 18 for printing of the images that can be picked up or delivered on short notice. In this situation, the member provider 16 would subcontract the job to the user designated alternate fulfillment member provider 18. A fee can be assessed for providing the stored digital image to the user designated fulfillment member provider 18 for printing. In this scenario, the user may designate the exact alternate fulfillment member provider 18 of his choice incurring a possible fee or he may simply request one hour delivery permitting the full service member provider 16 to locate an alternate fulfillment member provider 18 with whom it has a more favorable business relationship and thus avoiding the possible fee.

In a fifth scenario, the owner of the image may be a professional photographer that owns the rights to an image that a consumer desires to obtain an image product, such as an enlargement. The professional photographer may be a member provider 26 which owns the rights to the digital image files that they or another member provider stores. Upon accessing the digital image file for fulfillment, a fee may be incurred payable to the professional photographer 26 upon fulfilling of the requested goods and/or services. This allows various other member providers to provide services for the utilization of the copyrighted image including storage, printing, etc., compensating the owner of the image for its use while not restricting the consumer to a particular member provider. This permits greater utilization of the digital image by the requestor and by the owner of the image. Thus the owner of the image is not limited in its ability to provide goods and/or services with respect to the digital image.

Turning now to the selection process used by a service requestor, the locator of block 56 may be used in meeting the criteria of the requestor. For a given user, there are many criterion which will affect their selection of a member provider either explicitly or implicitly and can include any of the following criteria: brand, cost of service, specific product characteristics, delivery time, delivery method, delivery reach, access time, and/or the ability to ship to a specific location. Setting forth the criteria of importance to the user, the locator of block 56 takes the criteria and communicates with the services directory block 54 to present to the user a sorted list of potential member providers that can fulfill the requested goods and/or services. The user then makes the appropriate selection or provides or removes further criteria to find a suitable member provider.

The services directory 54 may provide a further service to the member providers. When a user is presented with a list of member providers meeting the user's criteria, the services directory 54 can apply a second set of criteria formed from business relationships established between member providers and the service manager 12. An example of a business relationship that forms a criterion is the payment by a member provider to the service manager 12 such that the listing of the member provider to the user will be given a preferential positioning or prominence in its display. Another example of a business criterion is a payment of a member provider to the service manager 12 for accessibility by a certain geographic customer base. For example, a member provider may be located in a particular city and pay a registration fee at first stated fee to fulfill service requests within a local area such as a 50 mile range. If the member provider wishes to service a broader region, a second, typically larger registration fee can be incurred. In addition, the member provider may have a second price listing to accommodate the enlarged service area. This dynamic information is maintained by the service manager 12 in the services directory 54.

In another operation of the system 10, each member, or requester, may send a request or offer to other member providers providing or requesting a bid for a particular service. For example a first provider make a request for bids from other providers as to the cost for providing a particular job, such as a custom frame and mounting of a print, to be completed by a given date. Then the first provider can accept a bid that best suits his business needs.

In yet another operation of the system 10 a provider, may send out an offer to do certain jobs for other providers, based on time and volume. This can be a special promotion or a standard offering. The offering can including a certain sharing of a designated portion of the fee to be charged to the customer that is to be given to the supplier of the customer.

In still another operation of the system 10, the requester can make an inquiry with respect to certain information that is not present or commonly available in the system 10, for example, which providers use environmentally friendly products, such as, biodegradable products versus long lasting products such as plastic, or the location where certain components were originally manufactured. The system 10 allows for this type of inquiry to be made.

As can be seen from the foregoing, the requester of services now has the ability to quickly retrieve a number of different photo service providers with out being restricted to a single brand or type provider nor limited to the type or style of products. In addition, the provider can concentrate on their core competencies and still increase the potential number of customer for it's goods and/or services.

As previously described, various member providers can have other service member providers provide goods and/or services for the completion of an order. As a result of such business transactions, certain providers will owe monies to other service providers. The system 10 allows for periodic settlements of monies owed by producing a periodic report that are forwarded to the providers owing monies to each other. This report may include the net resulting monies owed thus minimizing the financial transactions between the providers. The periodic reports can be done on a daily, weekly, monthly as desired by the parties. In order for the system 10 to properly function, the orders in the system 10 are passed through the service manager 12 that keeps track of the business transactions required to complete each order. Unique member IDs are used for securing the confidential nature of this information and properly assigning liabilities and/or credits to member providers.

In an alternate embodiment, each member provider initiates a settlement transaction report at the completion of their requested and provided service. In this case, member providers transmit the settlement transaction report directly between member providers and cause payments of monies to flow for each completed service request. The settlement transaction report is also provided to the service manager 12 for tracking of information related to quality of service and/or financial reliability that impact the credit rating or the standing of a specific member provider in the services directory 54.

As previously described various criteria may be used for finding a suitable provider base on a review of information stored on the system 10 that was provided by the provider. This information can be dynamically changed according to the needs and/or requirements of the provider. Thus, a provider may provide a price list for a particular service that may last for only a short period of time due to a special promotion and/or to meet the work flow requirements of the provider. The system 10 permits the provider to dynamically update the stored information in the services directory 54. The update may occur as frequently as desired or programmed to last for a predetermined time period. For example, a provider may set low price for a given product or service and one hour later change the price to a different price based on a predetermined criterion such as work flow capacity or a time period may be set for an hour, day, etc. for a given product. In addition if too many orders are received by a provider, for example by having a very attractive price, the system 10 may be configured to automatically forward additional orders to a different provider that the first provider may have a prearranged relationship.

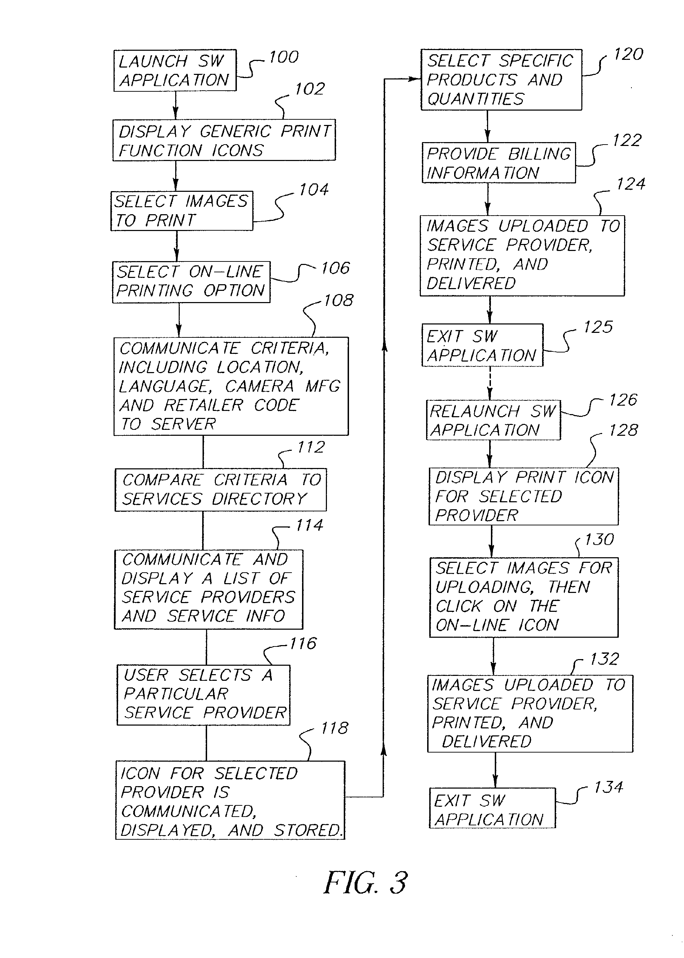

Fig. 3 is a flow diagram of a specific embodiment of the invention. In this embodiment, the customer / user has purchased a specific model digital camera from a specific retailer. The camera is provided with a CD disc or other digital media containing a software application for installation on the user's computer 28. In addition, the specific retailer provides, with the digital camera, a coupon having a retailer code which specifies the specific retailer (e.g. Kmart) and may also describe a discount (e.g. 5 free prints) which can be provided using the retailer code.

In block 100, the SW application is launched. While this may be done manually by the user using the normal operating system commands for launching software applications, in the preferred embodiment, the SW application is automatically launched when the user places the digital camera (such as a Kodak DX 3500 digital camera) into a docking unit (such as the Kodak EasyShare docking unit) and presses the transfer button.

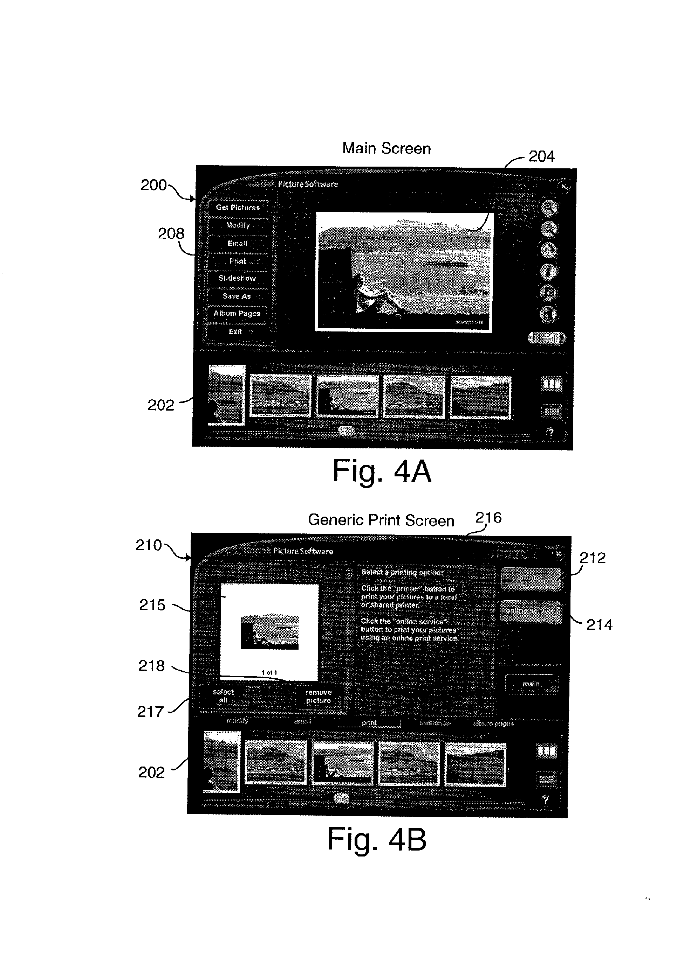

In block 102, the software application displays a first user interface screen 200 shown in Fig. 4A. The user interface screen 200 includes a filmstrip display 202 of numerous small "thumbnail" size pictures showing the images captured by the digital camera. The user interface screen 200 also includes a larger image 204 showing one particular image from the filmstrip display 202. To print one or more of the images captured by the digital camera, the user selects the print icon 208. In response to this user selection, the software application displays a second user interface screen 210, shown in Fig 4B, which includes a local printer icon 212, and an online service icon 214. An information display area 216 indicates that the printer icon 214 is used to print images on a local or shared printer at the user's location, and that the online service icon 214 is used to print images at a remote location via the internet.

In block 104, the user selects images to be printed, by selecting (e.g. clicking on) images from the filmstrip 202, which then appear in the selected image area 215. The user can also select all of the images to print using the select all icon 217, or remove particular images that have been previously selected, using the remove picture icon 218.

In block 108, the user selects the on-line printing option, by selecting (e.g. clicking on) the online service icon 214. Since this is the first time that the user has selected this icon, in block 110, the software application communicates several criteria to the service manager 12 (Fig. 1) via the communication network 14. In a preferred embodiment, the criteria include the location of the user's computer (which may be determined by information entered by the user when installing the software application, or by information already available on the user's computer, such as the user's ZIP code). In a preferred embodiment, the criteria also include the language spoken by the user (e.g. English, French, etc.) which can also be determined by information entered by the user when installing the software application, or by a language code already available on the user's computer. In a preferred embodiment, the criteria also include the camera make and model, which can be determined from metadata stored in the digital camera file by the camera, such as the Make/Model tag information in the Exif version 2.1 image file. In a preferred embodiment, the criteria also include the retailer code provided on the coupon supplied with the digital camera, and entered by the user, which specifies where the camera was purchased, and which may provide incentives (e.g. 5 free prints) for the user.

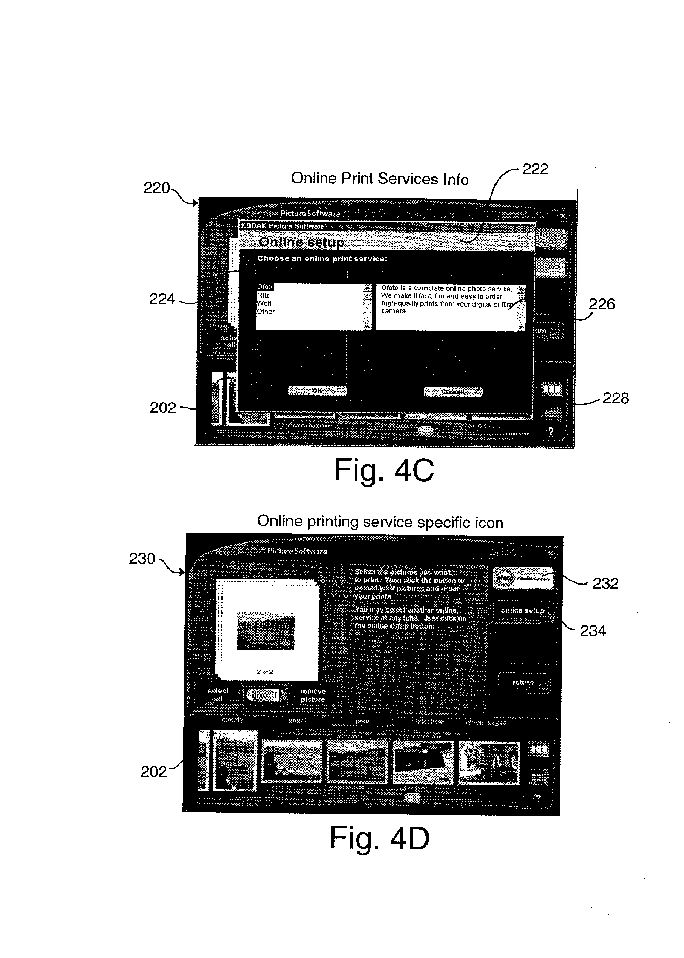

In block 112, the service manager 12 uses the locator 56 to determine, from the entries in the services directory 54, the most appropriate services, by comparing the criteria communicated in block 110 with the associated information in the service provider entries in the services directory. In block 114, the service manager 12 communicates the list of service providers, as well as service information for each provider, to the user's computer 28. Fig 4C shows a user interface screen 220 including a window 222 for selecting a particular service provider from an ordered list of service providers 224, which best match the criteria communicated in block 110. When the user selects (e.g. clicks on) one of the service providers from list 224, a corresponding information display 226 is provided, which describes the services offered by this particular service provider.

In block 116, the user selects a particular service provider from the list 224 by selecting the provider's name in the list, and then selecting the OK icon 228. In block 118, a specific icon for the selected service provider is communicated from the service manager 12 to the user's computer 28 where it is stored and displayed. Fig. 4D depicts a user interface screen 230, which now displays the specific icon 232 for the selected service provider (e.g. OFOTO), rather than a generic icon such as icon 214. In a preferred embodiment, the icon 232 includes a trademark logo or similar graphics element for the service provider, and the icon is an GIF format graphics file, although many different graphics or image formats (including PICT, DIB, JPEG, TIFF) may alternatively be used.

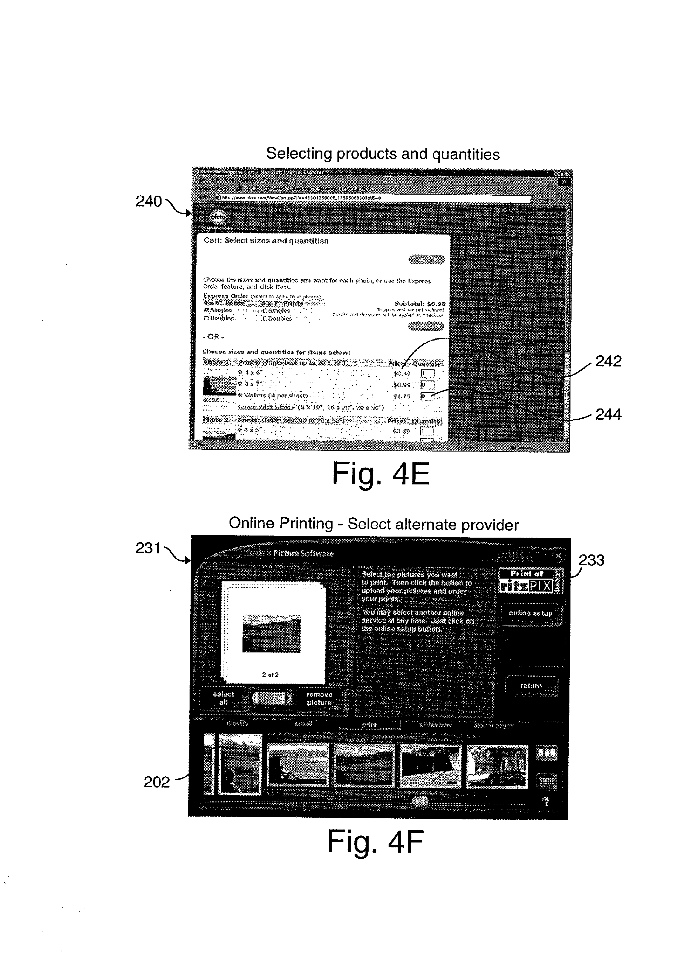

In block 120, the user selects specific products and quantities of prints to be made using the images selected in block 104. Fig. 4E depicts a user interface screen 240, which can be used to select a print quantity 244 and a print product 242. In block 122, the user provides billing information, such as a credit card or debit card type, card number, billing name and address, and the like. In a preferred embodiment, this billing information is communicated using a secure (encrypted) communication method, and is stored by the service provider for future use. he user can also provide a shipping address (if this is different from the billing address). Alternatively, the service provider may be a nearby retail outlet, and the customer may pick up the prints at the retailer and pay for the prints at that time.

In block 124, the full resolution digital images selected by the user in block 104 are uploaded to the service provider selected in block 116. The service provider then prints the images, bills the user for producing the prints, and delivers the prints to the customer's home, or provides them to the retail counter where the customer will pick them up.

In block 125, the user exits the software application. In some embodiments, this may be done as soon as the user has selected the images and products, as described in European Patent Application No. 01203790.9 filed 08 October 2001, and the images may be uploaded to the service provider at a more effective time (e.g. late at night).

Block 126 typically occurs many days later. At this time, the user has taken more images with their digital camera, which they would like to print. In block 126, the SW application is launched, as described previously in reference to block 100. In block 128, since the user has previously selected a particular service provider (in block 116), and the icon for this service provider was previously stored (in block 118), the user interface screen displayed when the user selects the print icon 208 in FIG 4A is the user interface screen 230 in FIG 4D containing the selected service provider icon 232, instead of the generic print screen 210 in FIG 4B having the generic online service icon 214. In other words, the icon stored in block 118 by the user's computer 28 is read and displayed as the specific service provider icon 232.

In block 130, the user uses user interface screen 230 in FIG. 4D to select the images for uploading, as described earlier in relation to block 104, and then selects (e.g. clicks on) the specific service provider icon 232. Alternatively, the user could instead select the online setup icon 234, to select a different online service provider. In this case, blocks 110 through 118 are again completed. In block 118, the icon for the newly selected service provider is communicated from the service manager 12 to the user's computer 28, where it is displayed and stored. As shown in FIG. 4F, the user interface screen 231 now displays a different specific service provider icon 233, in place of the original specific service provider icon 232.

In block 132, the products and quantities are chosen as described earlier in relation to block 120. Alternatively, the method described in European Patent Application No. 01201566.5 filed 01 May 2001, may be used so that this information does not need to be re-entered. This is particularly valuable when the selected products include photo album pages, which may be provided using various sizes, backgrounds, and the like. The images are then uploaded to the service provider, printed, and delivered as described earlier in reference to block 124. In block 134, the user exits the SW application.

A computer program product can include one or more storage medium, for example; magnetic storage media such as magnetic disk (such as a floppy disk) or magnetic tape; optical storage media such as optical disk, optical tape, or machine readable bar code; solid-state electronic storage devices such as random access memory (RAM), or read-only memory (ROM); or any other physical device or media employed to store a computer program having instructions for practicing a method according to the present invention.

## Claims

1. A method of selecting a digital photographic service provider from a plurality of different service providers and providing a photographic image service with respect to at least one digital image located at a user location remote from said selected photographic service provider, comprising:
a) providing a services directory which includes entries for a plurality of different service providers;
b) said user providing a criterion for selection of a service provider;
c) automatically providing the requester with a list of one or more of said plurality of different service providers based on said criterion;
d) said requester selecting one of said plurality of different service providers from said list;
e) providing a request for a desired service to the selected service provider; and
f) providing of said desired service by said selected service provider.

2. The method of claim 1, wherein the criterion comprises a location of a designated recipient.

3. The method of claim 1, wherein the criterion is selected from at least one of the following:
Brand of image capture device
Language
Retailer
Cost of service
Specific Product characteristics
Delivery time
Delivery method
Delivery reach
Specific provider characteristics
Access time
Ability to ship to specific location.

4. The method according to claim 1 wherein said automatically providing of said list is accomplished through the use of a locator service.

5. The method according to claim 1 wherein said requester selecting one of said plurality of different service providers from said list further comprises displaying a list of service providers and service information for at least one of the listed service providers .

6. A method according to claim 1 wherein the service provider is positioned on the display screen of imaging client according to a business criteria.

7. A method according to claim 1 further including the step of selected digital images captured by the digital camera

8. A system for providing imaging services over a communications network, including:
a) a first device having a user interface for receiving commands from a user and a network interface,
b) a plurality of different service providers connected to said communication network,
c) a computer having a network interface for communication to said first device over said communication network, wherein said computer having a services directory having entries for a plurality of different service providers, each of said plurality of different service providers having associated information,
d) wherein the user, using said first device, provides at least one criterion
e) said computer automatically provides a list of at least one of said plurality of different service providers based on the criterion, using said associated information,
f) said selected service provider providing said requested service.

9. A computer software product for linking a digital camera user to a service provider selected from a plurality of service providers, said computer software program will when loaded on to a computer will cause the computer to do the following steps:
a) providing a services directory which includes entries for a plurality of service providers;
b) communicating at least one criterion from the digital camera user;
c) automatically providing the digital camera user with a list of one or more of said plurality of different service providers based on the criterion;
d) said digital camera user selecting one of said plurality of different service providers from said list;
e) providing a request for a desired service to the selected service provider,
f) providing of said desired service by said selected service provider.

10. A method of linking a digital photographic imaging service requester to a service provider selected from a plurality of different service providers that are registered in a member system, comprising:
a) providing a services directory which includes entries for a plurality of services, each service associated with at least one of said plurality of different service providers;
b) the service requester providing at least one digital image and at least one criterion;
c) automatically providing the requester with a list of one or more of said plurality of different service providers based on said criterion;
d) said requester selecting one of said plurality of different service providers from said list;
e) providing a request for a desired service and providing said digital image to the selected service provider; and
f) providing of said desired service by said selected service provider.
